# EUROPÄISCHE PATENTSCHRIFT

(11) **EP 1 277 509 B1**
(45) Veröffentlichungstag und Bekanntmachung des Hinweises auf die Patenterteilung: **26.10.2005**
(21) Anmeldenummer: 02015823.4
(22) Anmeldetag: 16.07.2002
(51) Int. Cl.: B01D 61/18, B01D 17/02, B01D 61/14, C02F 1/44, C10M 175/06

(54) **Vorrichtung zum Auftrennen eines Fluidgemisches**
Device for separating fluid mixtures
Dispositif pour la séparation des mélanges de fluides

(30) Priorität: 20.07.2001 DE 10135420
(43) Veröffentlichungstag der Anmeldung: 22.01.2003
(73) Patentinhaber: Hydac Process Technology GmbH, 66538 Neunkirchen (DE)
(72) Erfinder: Wnuk, Ralf, Dr., 66450 Bexbach (DE); Mayer, Michael, 66123 Saarbrücken (DE); Böttcher, Thomas, 66557 Illingen (DE); Theis, Dieter, 66399 Mandelbachtal (DE)
(74) Vertreter: Bartels & Partner

(56) Entgegenhaltungen:
- EP-A- 0 563 646
- EP-A- 0 730 894
- WO-A-94/13380
- DE-A- 19 753 326
- DE-U- 29 611 811
- US-A- 5 372 722
- PATENT ABSTRACTS OF JAPAN vol. 018, no. 437 (C-1238), 16. August 1994 (1994-08-16) -& JP 06 134265 A (BESUTO KOGYO KK), 17. Mai 1994 (1994-05-17) -& DATABASE WPI Derwent Publications Ltd., London, GB; AN 1994-196320 XP002233645 & JP 06 134265 A

## Beschreibung

Die Erfindung betrifft eine Vorrichtung zum Auftrennen eines Fluidgemisches in mindestens zwei seiner Bestandteile mit einer Arbeitskammer und einer Ruhekammer, die der Aufnahme des Fluidgemisches sowie von abgesetzten Bestandteilen desselben dient, und aus der mittels einer Motor - Pumpeneinheit für das Durchführen einer Filtration mittels eines Querstromfilters das Fluidgemisch in die Arbeitskammer gelangt, gemäß der weiteren Merkmalsausgestaltung des Oberbegriffes des Patentanspruches 1.

Durch die DE 37 06 888 A1 ist es bekannt, ein Flüssigkeitsgemisch einer mindestens zweistufigen Schwerkrafttrennung zu unterwerfen, wobei das Flüssigkeitsgemisch zunächst in eine leichtere und eine schwerere Phase getrennt wird. Anschließend kann die jeweils derart erhaltene Phase wiederum in zwei Phasen - eine leichtere und eine schwerere - aufgetrennt werden. Diese bekannte Art der Phasentrennung erlaubt keine vollständige Trennung, da die leichtere Phase in geringerem Anteil immer in der schwereren Phase und die schwerere Phase wiederum in geringem Anteil in der leichteren Phase zu finden ist.

Durch JP - Abstract 62-254 809 (A) ist eine Kreislaufführung mit Filterelement bekannt, die der Abtrennung von Wasser aus organischen Lösungsmitteln dient, wobei nach einem ersten Separationsschritt das noch Wasser enthaltende Lösungsmittel durch eine Pumpe einem Filter zugeführt wird und danach das Lösungsmittel in einem Tank gespeichert und das Wasser in den Trennbehälter zurückgeführt wird. Hierbei kann es zu einer ungewollten Aufkonzentrierung der jeweils geringeren Anteile in den Phasen kommen. Eine vollständige Auftrennung des dahingehenden Fluidgemisches ist mithin nicht möglich.

Die DE 93 00 595 U offenbart ein Verfahren zum Auftrennen eines Fluidgemisches mittels eines Phasentrenners in Form eines Abscheiders und einer Filtereinheit, wobei das Retentat der Filtereinheit zusammen mit einem Verunreinigungen aufweisenden Fluidgemisch wiederholt dem Phasentrenner zugeführt wird. Mit dieser bekannten Lösung wird nur eine Phase des Phasentrenners über die Filtereinheit weiter behandelt und die Filtereinheit übernimmt keine weitere Aufbereitung des entstehenden Retentates. Eine vollständige effiziente Auftrennung dahingehender Fluidgemische mit der bekannten Lösung ist nicht möglich, da die eine aufgetrennte Phase immer unbehandelt bleibt und es zu Aufkonzentrierungsprozessen im Abscheider kommt.

Durch die EP 0 730 894 B1 ist eine Vorrichtung sowie ein Verfahren zum Auftrennen eines Verunreinigungen aufweisenden Fluidgemisches in mindestens zwei seiner Bestandteile bekannt. Bei diesem bekannten gattungsbildenden Verfahren wird mittels eines Phasentrenners der eine Unterphase bildende eine Bestandteil des Fluidgemisches von dem anderen eine Oberphase bildenden Bestandteil getrennt, wobei jeder abgetrennte Bestandteil in einer separaten Kreislaufführung jeweils einer Filtereinheit zugeführt wird, bei der als Filtrat die Phasen getrennt voneinander ausgeschieden werden. Wiederholt wird ein Teil des aus der jeweiligen Filtereinheit austretenden Retentates dem Phasentrenner und der andere Teil des Retentates erneut der jeweiligen Filtereinheit zugeführt, wobei wiederholt ein Kreislauf über den Phasentrenner und gleichzeitig wiederholt ein Kreislauf vom retentatseitigen Filterausgang zum Filtereingang erfolgt. Bei dem dahingehenden Verfahren ist eine vollständige Auftrennung dahingehender Fluidgemische effizient und kostengünstig möglich, wobei jedoch die mehrere Behälter umfassende Vorrichtung groß aufbaut. Letzteres wird auch dadurch begünstigt, daß Motor- Pumpeneinheiten sowie die Filtereinheiten in Form von Querstromfiltern zusätzlich zu den Behältern selbst Bauraum einnehmen. Bei beengten Einbauverhältnissen oder bei mobilen Anwendungen kommt daher die bekannte Vorrichtung, die eher für großtechnische Verfahren konzipiert ist, trotz ihrer Vorteile kaum zur Anwendung.

Durch die US-A-5,372,722 ist eine gattungsgemäße Vorrichtung zum Auftrennen eines Fluidgemisches in mindestens zwei seiner Bestandteile mit einer Arbeitskammer und einer Ruhekammer bekannt, die der Aufnahme des Fluidgemisches sowie von abgesetzten Bestandteilen desselben dient und aus der mittels einer Motor-Pumpeneinheit für das Durchführen einer Filtration mittels eines Querstromfilters das Fluidgemisch in die Arbeitskammer gelangt, wobei die Motor-Pumpeneinheit aus einer Tauchpumpe gebildet ist, die zusammen mit dem Querstromfilter als Baueinheit in der Arbeitskammer aufgenommen ist, wobei das Retentat des Querstromfilters über eine Rückführung in die Arbeitskammer gelangt, und wobei auf der Reinseite des Querstromfilters über einen Ausgang das Filtrat aus der Vorrichtung abführbar ist. Bei der bekannten Lösung besteht das Problem, dass die Sedimentation bzw. Flotation in der Ruhekammer durch die teilweise Retentat-Rückführung gestört werden kann. Ferner ist bei der bekannten Vorrichtung nicht auszuschließen, das kleinvolumige Öltröpfchen und Verunreinigungen in der Arbeitskammer angereichert werden.

Durch die EP-A-0 730 894 ist ein System zur Phasentrennung mit Ruhekammer nebst Abtrennung der Oberphase und nachgeschalteter Filtrationsbehandlung der Unterphase in einer Arbeitskammer bekannt, mit einem Querstrom-Filtrationskreislauf. Bei der bekannten Lösung soll in der Kammer mit der Unterphase keine Anreicherung der Oberphase erfolgen, so daß sich die Vorteile einer zumindest teilweisen Rückführung des Retentates in den Phasentrenner ergeben. Da die bekannte Lösung allgemein zur Behandlung zweiphasiger Gemische aus organischen Lösungsmitteln und Wasser eingesetzt ist, mithin also auch für ölhaltiges Wasser mit Verunreinigungen, läßt sich dergestalt eine ungewollte Anreicherung von kleinvolumigen Öltröpfchen und Verunreinigungen in der Arbeitskammer vermeiden.

Ausgehend von diesem Stand der Technik liegt der Erfindung die Aufgabe zugrunde, unter Beibehalten der Vorteile im Stand der Technik eine verbesserte Vorrichtung zu schaffen, die vielfältig einsetzbar ist und dennoch wenig Bauraum einnimmt und insbesondere auch für einen mobilen Einsatz besonders geeignet ist. Ferner soll mit der erfindungsgemäßen Vorrichtung eine Anreicherung von kleinvolumigen Öltröpfchen und Verunreinigungen in der Arbeitskammer vermieden werden und die Sedimentation bzw. Flotation in der Ruhekammer soll nicht gestört werden. Eine dahingehende Aufgabe löst eine Vorrichtung mit den Merkmalen des Patentanspruches 1 in seiner Gesamtheit.

Dadurch, daß gemäß dem kennzeichnenden Teil des Patentanspruches 1 die Rückführung für das Retentat eine Abzweigung aufweist, die in die Ruhekammer mündet, ist vermieden das kleinvolumige Öltröpfchen und Verunreinigungen in der Arbeitskammer angereichert werden können. Durch das weitere kennzeichnende Merkmal des Patentanspruches 1, dass die freie Mündung der Abzweigung in eine eigenständige Überlaufkammer in der Ruhekammer mündet, aus deren Überlauf die Ruhekammer versorgt ist, ist sichergestellt, dass die Sedimentation bzw. Flotation in der Ruhekammer durch eine teilweise Retentat-Rückführung nicht gestört ist.

Durch die Integration der Baueinheit gebildet aus Schlauchpumpe und Querstromfilter ist der Bauraum optimal ausgenutzt und der Behälter in Form der Arbeitskammer mit seinem großen Aufnahmevolumen sinnvoll eingesetzt. Es ist für einen Fachmann auf diesem Gebiet überraschend, daß er durch Integrierung von Antriebs- und Filterkonzepten in einen Behälter zu einer platzsparenden Gesamtvorrichtung kommt, die dennoch hocheffizient arbeitet, wie dies sonst nur bei großtechnischen Anlagen bekannt ist, bei denen man die Bauteile in Funktionsgruppen aufgetrennt räumlich voneinander vollständig separiert. Trotz der Integration der Baueinheit in der Arbeitskammer ist im Wartungsfall eine gute Zugänglichkeit gewährleistet, so daß für die meisten technischen Anwendungen die erfindungsgemäße Vorrichtung den praktischen Einsatzfällen vollständig genügt. Die angesprochene Tauchpumpe gilt als technisch ausgereift und es bereitet auch aus elektrischer oder sicherheitstechnischer Sicht keine Probleme, eine solche Tauchpumpe in einer Arbeitskammer mit Fluid als Fördermittel aufzunehmen.

Bei der angesprochenen Querstromfiltration mittels eines Querstromfilters verhindert die regelmäßig sehr starke Strömung parallel zur Filteroberfläche des innerhalb der Kreislaufführung eingesetzten Querstromfilters laufend den Aufbau eines Filterkuchens, so daß dieser den eigentlichen Filtrationsfluß auch nicht beeinträchtigen kann. Darüber hinaus ist mit der Querstromfiltration grundsätzlich die gleichzeitige Weiterverarbeitung von Retentat und Filtrat möglich. Mittels der Querstromfiltration werden die zur kontinuierlichen Prozeßführung des Verfahrens benötigten zwei Produktströme erhalten, wobei das Filtrat als die reine Phase das gewünschte Endprodukt darstellt. Das Retentat ist die bei der Filtration entstehende verunreinigte Phase, die auch als Konzentrat bezeichnet ist und die in einem Filtrationskreislauf sowie anteilig wiederholt rückgeführt werden kann.

Die vorliegende Vorrichtung eignet sich besonders für Wasser-Öl-Fluidgemische, die sog. Emulsionen bilden, die grundsätzlich aus nicht mischbaren Phasen, wie Wasser und Öl, aufgebaut sind.

Bei einer bevorzugten Ausführungsform der erfindungsgemäßen Vorrichtung ist die Tauchpumpe als solche in Richtung des Bodens der Arbeitskammer befestigt, wobei der Querstromfilter von einem Gehäuse aufgenommen in Längsrichtung aufgestellt in etwa hälftig, aus der Arbeitskammer herausragt. Somit nimmt die Baueinheit wenig Bauraum in der Arbeitskammer ein und der Querstromfilter ist von außen gut zugänglich in der Vorrichtung aufgenommen.

Weiter ist vorzugsweise vorgesehen, daß die Rückführung und/oder die Abzweigung zum Einstellen der Fluidströme mit einstellbaren Drosseln versehen sind. Auf diese Art und Weise ist ein quasi kontinuierlicher Betrieb mit der Vorrichtung möglich und insbesondere ist sichergestellt, daß die Arbeitskammer nicht leerlaufen kann, sondern permanent den Querstromfilter versorgt, auch wenn über die Ruhekammer kein Kondensat als aufzutrennendes Fluidgemisch nachgeführt wird.

Erfindungsgemäß ist vorgesehen, daß die freie Mündung der Abzweigung in eine eigenständige Überlaufkammer in der Ruhekammer mündet, aus deren Überlauf die Ruhekammer versorgt ist. Hierdurch wird zusätzlich sichergestellt, daß das Membranmodul bei Stillstand nicht leerlaufen kann, was gegebenenfalls das empfindliche Filtrationsmedium schädigen könnte.

Bei einer weiteren bevorzugten Ausführungsform der erfindungsgemäßen Vorrichtung weist die Ruhekammer einen Überlauf für insbesondere aufschwimmende Öltröpfchen an ihrer Oberseite auf, so daß dergestalt kontinuierlich die Ruhekammer von größeren Öltröpfchen befreit werden kann.

Bei einer weiteren bevorzugten Ausführungsform der erfindungsgemäßen Vorrichtung ist vorgesehen, daß die Arbeitskammer für die Überwachung ihrer Füllstandssituation mit einem Zustandssensor versehen ist, beispielsweise in Form eines Schwimmerschalters. Auch dergestalt läßt sich sicherstellen, daß es nicht dazu kommen kann, daß das Membranmodul ungewollt leerläuft.

Im folgenden wird die erfindungsgemäße Vorrichtung anhand der Zeichnung nähe erläutert. Dabei zeigen in prinzipieller und nicht maßstäblicher Darstellung die
- Fig.1: in der Art einer Schaltdarstellung die wichtigsten Komponenten der Vorrichtung und die
- Fig.2: eine seitliche Ansicht auf die Vorrichtung nach der Fig.1.

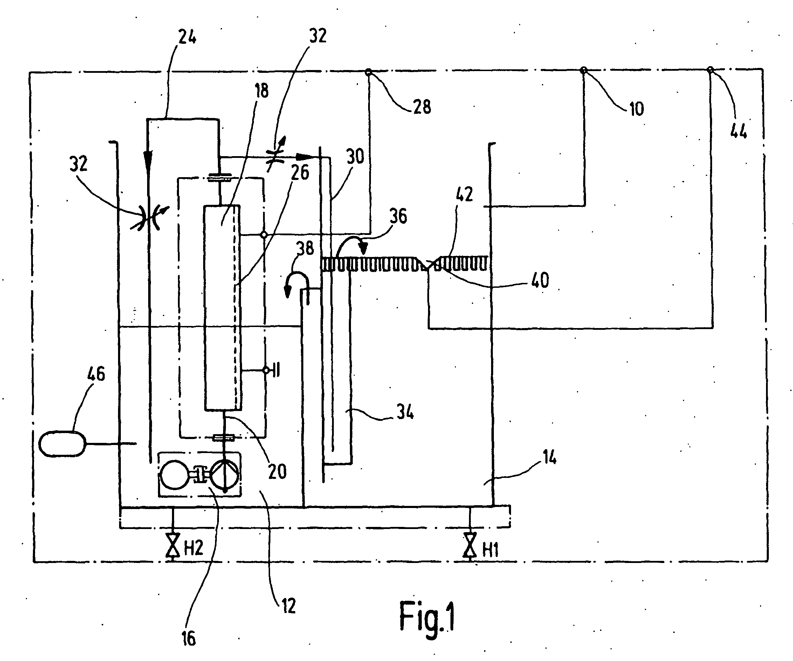

Bei dem in der Fig.1 gezeigten Ausführungsbeispiel einer erfindungsgemäßen Vorrichtung dient diese dem Auftrennen eines Fluidgemisches, im vorliegenden Fall in Form einer Öl-Wasser-Emulsion, die über den Eingang 10 der Vorrichtung zugeführt wird. Bei der genannten Öl-Wasser-Emulsion bildet diese ein Fluidgemisch aus zwei nicht mischbaren Phasen, hier Öl und Wasser. Für die dahingehende Auftrennung weist die Vorrichtung eine Arbeitskammer 12 auf sowie eine Ruhekammer 14. Für die Aufnahme des Fluidgemisches über den Eingang 10 mündet dieser mit seinem einen freien Ende in den oberen Bereich der Ruhekammer 14 ein. Neben der dahingehenden Aufnahme dient die Ruhekammer 14 auch als Absetzkammer für sedimentierende Bestandteile. Die dahingehend sedimentierten Teile können über ein Ablaßventil H1 von Zeit zu Zeit aus der Ruhekammer 14 entfernt werden.

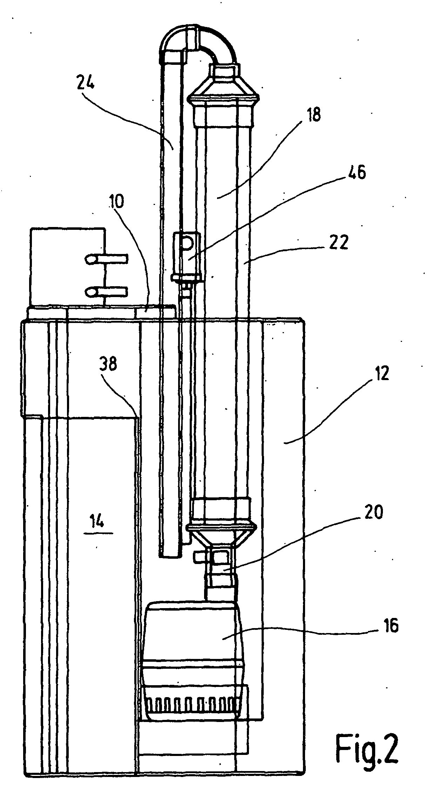

Die Arbeitskammer 12 weist eine Motor - Pumpeneinheit 16 als Baugruppe in Form einer handelsüblichen Tauchpumpe auf. Mittels dahingehender Tauchpumpen werden auch Grauwasser aus Waschmaschinen abgepumpt sowie die Förderung von Drainage- oder Regenwasser vorgenommen. Der Förderstrom ist an sich niedrig und liegt im vorliegenden Ausführungsbeispiel bei ca. 13 m³/h, wobei dies für die vorliegende Anwendung völlig ausreicht. Für das Durchführen der Filtration selbst ist wiederum ein Querstromfilter 18 vorgesehen, der, was noch näher dargestellt werden wird, eine Auftrennung des Fluidgemisches in ein Filtrat und ein Retentat durchführt. Wie insbesondere die Fig.2 zeigt, ist die aus der Motor - Pumpeneinheit 16 gebildete Tauchpumpe an der Unterseite der Arbeitskammer 12 befestigt und der längliche Querstromfilter ist auf den Pumpausgang der Tauchpumpe mit seinem Filtereingang 20 aufgesetzt. Für Austauschvorgänge läßt sich die dahingehende Baueinheit, bestehend aus Querstromfilter 18 sowie Tauchpumpe 16, einfach von oben her aus der Arbeitskammer 12 entfernen und nach vorgenommenen Wartungs- und/oder Austauschvorgängen auch wieder einsetzen. Durch die Integration der dahingehenden Baueinheit in die Arbeitskammer 12 nimmt die Gesamt - Separator - Vorrichtung wenig Bauraum ein und die sonst außerhalb großtechnisch angeordneten Einheiten, wie Pumpen, Querstromfilter und die zugehörige Verrohrrung, sind allesamt in der Vorrichtung integriert.

Der eigentliche Querstromfilter 18 ist zum Schutz seiner Filtermaterialien von einem Gehäuse 22 aufgenommen und dabei derart in Längsrichtung aufgestellt, daß das Gehäuse 22 in etwa hälftig aus der Arbeitskammer 12 ragt. Des weiteren braucht das Gehäuse 22 nicht noch einmal eigenständig befestigt zu werden, sondern wird von der Motor - Pumpeneinheit 16 sicher gehalten.

Wie die Fig.1 des weiteren zeigt, wird das Retentat des Querstromfilters 18 über eine Rückführung 24 in die Arbeitskammer 12 zurückgeleitet. Wie insbesondere die Fig.2 zeigt, mündet dabei das freie Ende der fluidführenden Rückführung 24 oberhalb der Tauchpumpe 16 in die Arbeitskammer 12. Die Reinseite 26 des Querstromfilters 18 hingegen mündet über einen Ausgang 28 aus der Vorrichtung hinaus. Der dahingehende Ausgang 28 ist für die Abführung des Filtrats, hier in Form von reinem Wasser, vorgesehen. Die Rückführung 24 für das Retentat weist oberhalb des Querstromfilters 18 eine Abzweigung 30 auf, so daß ein Teil des Retentatstromes abgezweigt nicht in die Arbeitskammer 12 gelangt, sondern wiederum in die Ruhekammer 30, in der sich kleinvolumige Öltröpfchen und Verunreinigungen am Boden absetzen können. Insofern werden Aufkonzentrierungsvorgänge über das in die Arbeitskammer 12 mündende Retentat vermieden. Zum Einstellen der Fluidströme sind in die Rückführung 24 sowie in die Abzweigung 30 Drosseln 32 geschaltet, die insbesondere einstellbar sind.

Die freie Mündung der Abzweigung 30 (vgl. Fig.1) mündet in eine eigenständige Überlaufkammer 34, die in der Ruhekammer 14 angeordnet ist und aus deren Überlauf 36 die Ruhekammer 14 versorgt ist. Der dahingehende Überlauf 36 ist etwas höher angeordnet als der weitere Überlauf 38, über den die Ruhekammer 14 die Arbeitskammer 12 mit dem aufzutrennenden Fluidgemisch versorgt. Des weiteren weist die Ruhekammer 14 einen dritten Überlauf 40 in der Art eines Abschöpfüberlaufes auf, so daß insbesondere großvolumige Öltröpfchen 42, die an der Oberseite des Fluidgemisches in der Ruhekammer 14 aufschwimmen, aus der Ruhekammer 14 nach außen abgeführt werden können. Somit steht über den dritten Überlauf 40 ein Ölüberlauf mit Ausgangsstelle 44 zur Verfügung. Für einen funktionssicheren Betrieb der Vorrichtung ist des weiteren vorgesehen, daß die Arbeitskammer 12 für die Überwachung ihrer Füllstandssituation mit einem Zustandssensor versehen ist in Form einer Überwachungseinrichtung 46 mit Schwimmerkörper (nicht dargestellt). Des weiteren weist auch die Arbeitskammer 12 an ihrer Behälterunterseite ein Ablaufventil H2 auf, um von Zeit zu Zeit den Behälter von sedimentierenden Bestandteilen befreien zu können.

Des besseren Verständnisses wegen wird im folgenden die erfindungsgemäße Vorrichtung anhand eines Betriebsablaufs näher erläutert.

Zunächst wird über den Eingang 10 das Kondensat in Form einer Öl-Wasser-Suspension zugeführt. Die Ruhekammer 14 befüllt sich, bis über den weiteren Überlauf 38 das Fluidgemisch in die Arbeitskammer 12 eintritt. Bei zugeschalteter Motor - Pumpeneinheit (Tauchpumpe) 16 wird das dahingehend eingebrachte Fluidgemisch über den Filtereingang 20 dem Querstromfilter 18 zugeführt und dieser nimmt eine Aufteilung des Fluidgemisches in ein Retentat und in ein Filtrat vor. Das aus reinem Wasser bestehende Filtrat wird über die Reinseite 26 des Querstromfilters 18 und den Ausgang 28 aus der Vorrichtung abtransportiert. Das mit Öltröpfchen aufkonzentrierte Retentat wird über die Rückführung 24 in die Arbeitskammer 12 rückgefördert. Somit ist eine Kreislaufführung des Retentats 24 in der Arbeitskammer 12 erreicht. Um Aufkonzentrierungsvorgänge in der Arbeitskammer 12 zu vermeiden, ist jedoch vorgesehen, daß in die Rückführung 24 eine Abzweigung 30 mündet und ein Teil des Retentatstromes wird in eine eigenständig Überlaufkammer 34 in die Ruhekammer 14 rückgeführt. Sobald die Überlaufkammer 34 befüllt ist, wird der dahingehende Retentatstrom über den Überlauf 36 in die sonstige Ruhekammer abgegeben. Über die Ansteuerung der Drosseln 32 sowohl in der Rückführung 24 als auch in der Abzweigung 30 lassen sich die Förderströme derart einregulieren, daß beim kontinuierlichen Betrieb mit der Vorrichtung zum einen sichergestellt ist, daß es nicht zu ungewünschten Aufkonzentrierungsvorgängen in der Arbeitskammer 12 kommt und zum anderen, daß bei Stillstand des Betriebes das Filtermodul des Querstromfilters 18 nicht leerläuft, was gegebenenfalls zu einer Beschädigung des empfindlichen Filtermaterials führen könnte. Somit ist auch bei Stillstand der Vorrichtung eine geschlossene schonende Weiterführung des Verfahrens möglich. Das auf der Oberseite der Ruhekammer 14 aufschwimmende Öl wird über den Ölüberlauf 44 aus der Vorrichtung ausgebracht.

Mit den entsprechenden Betriebsparametern läßt sich daher ein langzeitstabiler Betrieb der Vorrichtung und der Filtermembran erreichen, wobei eine langzeitstabile Filtratleistung trotz geringer Pumpenleistung möglich ist. Des weiteren ist bei Stillstand der Anlage ein Leerlauf derselben und damit ein Austrocknen der Membran des Querstromfilters 18 mit Sicherheit vermieden.

## Patentansprüche

1. Vorrichtung zum Auftrennen eines Fluidgemisches in mindestens zwei seiner Bestandteile mit einer Arbeitskammer (12) und einer Ruhekammer (14), die der Aufnahme des Fluidgemisches sowie von abgesetzten Bestandteilen desselben dient und aus der mittels einer Motor - Pumpeneinheit (16) für das Durchführen einer Filtration mittels eines Querstromfilters (18) das Fluidgemisch in die Arbeitskammer (12) gelangt, wobei die Motor - Pumpeneinheit (16) aus einer Tauchpumpe gebildet ist, die zusammen mit dem Querstromfilter (18) als Baueinheit in der Arbeitskammer (12) aufgenommen ist, wobei das Retentat des Querstromfilters (18) über eine Rückführung (24) in die Arbeitskammer (12) gelangt, und wobei auf der Reinseite (26) des Querstromfilters (18) über einen Ausgang (28) das Filtrat aus der Vorrichtung abführbar ist, **dadurch gekennzeichnet, daß** die Rückführung (24) für das Retentat eine Abzweigung (30) aufweist, die in die Ruhekammer (14) mündet und daß die freie Mündung der Abzweigung (30) in eine eigenständige Überlaufkammer (34) in der Ruhekammer (14) mündet, aus deren Überlauf (36) die Ruhekammer (14) versorgt ist.

2. Vorrichtung nach Anspruch 1, **dadurch gekennzeichnet, daß** die Tauchpumpe (16) als solche in Richtung des Bodens der Arbeitskammer (12) befestigt ist und daß der Querstromfilter (18) von einem Gehäuse (22) aufgenommen und in Längsrichtung aufgestellt ist, so dass der Querstromfilter in etwa hälftig aus der Arbeitskammer (12) herausragt.

3. Vorrichtung nach Anspruch 1 oder 2, **dadurch gekennzeichnet, daß** als Fluidgemisch eine Emulsion von Wasser und Öl der Ruhekammer (14) zuführbar ist, daß der Querstromfilter (18) derart gewählt ist, daß das Filtrat aus reinem Wasser besteht, und daß das Retentat in aufkonzentrierter Form Ölbestandteile aufweist.

4. Vorrichtung nach einem der Ansprüche 1 bis 3, **dadurch gekennzeichnet, daß** die Rückführung (24) und/oder die Abzweigung (30) zum Einstellen der Fluidströme mit einstellbaren Drosseln (32) versehen sind.

5. Vorrichtung nach einem der Ansprüche 1 bis 4, **dadurch gekennzeichnet, daß** die Ruhekammer (14) einen Überlauf (40) für insbesondere aufschwimmende Öltröpfchen an ihrer Oberseite aufweist.

6. Vorrichtung nach einem der Ansprüche 1 bis 5, **dadurch gekennzeichnet, daß** die Arbeitskammer (12) für die Überwachung ihrer Füllstandssituation mit einem Zustandssensor (46) versehen ist.

## Claims

1. Means for separating a fluid mixture into at least two of its components, with a working chamber (12) and a resting chamber (14), serving to receive the fluid mixture as well as settled components of the same, and from which the fluid mixture is transported to the working chamber (12) by means of a motor/pump unit (16) for the execution of a filtration process by means of a transverse flow filter (18), whereby the pump unit (16) consists of a submersible pump which is received as part of an assembly into the working chamber (12) together with the transverse flow filter (18), whereby the retentate of the transverse flow filter (18) reaches the working chamber (12) via a return line (24), and whereby the filtrate can be extracted on the clean side (26) of the transverse flow filter (18) via an outlet (28), **characterised in that** the return line (24) for the retentate incorporates a branch line (30) which opens out into the resting chamber (14), and **in that** the free opening of the branch line (30) opens out into an independent overflow chamber (34) within the resting chamber (14), from which overflow (36) the resting chamber (14) is supplied.

2. Means according to Claim 1, **characterised in that** the submersible pump (16) as such is affixed in the direction of the floor of the working chamber (12), and **in that** the transverse flow filter (18) is received by a housing (22) and erected in a longitudinal direction, so that about half of the transverse flow filter projects from the working chamber (12).

3. Means according to Claim 1 or 2, **characterised in that** an emulsion of water and oil can be supplied to the resting chamber (14) as a fluid mixture, **in that** the transverse flow filter (18) is chosen in such a way that the filtrate consists of pure water, and **in that** the retentate incorporates oil components in concentrated form.

4. Means according to one of the Claims 1 to 3, **characterised in that** the return line (24) and/or the branch line (30) are/is equipped with adjustable throttles (32) for adjusting the fluid streams.

5. Means according to one of the Claims 1 to 4, **characterised in that** the resting chamber (14) incorporates an overflow (40) at its surface, especially for floating oil drops.

6. Means according to one of the Claims 1 to 5, **characterised in that** the working chamber (12) is equipped with a condition sensor (46) for monitoring the fill level situation of the same.

## Revendications

1. Dispositif pour séparer un mélange de fluides en au moins deux de ses constituants avec une chambre de travail (12) et une chambre de repos (14) ; lequel sert à la réception du mélange de fluides ainsi que des constituants déposés de ce dernier et depuis lequel le mélange de fluides accède à la chambre de travail (12) au moyen d'une unité moteur-pompe (16) pour l'exécution d'une filtration au moyen d'un filtre à courant transversal (18), sachant que l'unité moteur-pompe (16) est formée d'une pompe noyée qui, conjointement avec le filtre à courant transversal (18), est intégrée comme unité physique dans la chambre de travail (12), sachant que le rétentat du filtre à courant transversal (18) accède à la chambre de travail (12) via un circuit de retour (24), et sachant que du côté pur (26) du filtre à courant transversal (18) le filtrat peut être évacué du dispositif via une sortie (28), **caractérisé en ce que** le circuit de retour (24) pour le rétentat comporte une dérivation (30) qui débouche dans la chambre de repos (14) et **en ce que** l'ouverture libre de la dérivation (30) débouche dans une chambre autonome de trop-plein (34) située dans la chambre de repos (14), la chambre de repos (14) étant alimentée à partir du trop-plein (36) de ladite chambre (34).

2. Dispositif selon la revendication 1, **caractérisé en ce que** la pompe noyée (16) en tant que telle est fixée en direction du fond de la chambre de travail (12) et **en ce que** le filtre à courant transversal (18) est intégré dans un boîtier (22) et placé dans le sens longitudinal, de telle sorte que le filtre à courant transversal fait saillie approximativement à moitié hors de la chambre de travail (12).

3. Dispositif selon la revendication 1 ou 2, **caractérisé en ce que** une émulsion à base d'eau et d'huile peut être alimentée comme mélange de fluides dans la chambre de repos (14), **en ce que** le filtre à courant transversal (18) est choisi de telle sorte que le filtrat se compose d'eau pure et **en ce que** le rétentat comporte des constituants d'huile sous forme concentrée.

4. Dispositif selon l'une des revendications 1 à 3, **caractérisé en ce que** le circuit de retour (24) et/ou la dérivation (30) sont pourvus de papillons réglables (32) pour réguler les courants de fluide.

5. Dispositif selon l'une des revendications 1 à 4, **caractérisé en ce que** la chambre de repos (14) comporte sur sa partie supérieure un déversoir (40) pour les gouttelettes d'huile en suspension notamment.

6. Dispositif selon l'une des revendications 1 à 5, **caractérisé en ce que** la chambre de travail (12) est pourvue d'un capteur d'état (46) pour le contrôle de l'état de sa hauteur de remplissage.
